# EUROPEAN PATENT SPECIFICATION

(11) **EP 4 205 504 B1**
(45) Date of publication and mention of the grant of the patent: **04.11.2026**
(21) Application number: 21859462.0
(22) Date of filing: 26.08.2021
(51) Int. Cl.: H05B 3/14, H05B 3/06, F28D 20/00, H05B 3/40

(54) **ELECTRICALLY ISOLATING SUPPORT ELEMENT**
ELEKTRISCH ISOLIERENDES TRÄGERELEMENT
ÉLÉMENT DE SUPPORT ÉLECTRIQUEMENT ISOLANT

(30) Priority: 26.08.2020 CA 3091177
(43) Date of publication of application: 05.07.2023
(73) Proprietor: Kelvin Thermal Energy, Inc., Toronto, ON M4P 1K2 (CA)
(72) Inventor: AHADI, Amirhossein, Toronto, Ontario M5A 2M5 (CA); LYNCH, George, Escondido, California 92025 (US); SUBRAMANYAM, Aarik, North York, Ontario M2K 3C1 (CA)
(74) Representative: Murgitroyd & Company
(86) International application number: PCT/CA2021/051183
(87) International publication number: WO 2022/040800

(56) References cited:
- US-A- 3 992 609
- US-A- 5 442 158
- US-A- 5 442 158
- US-A1- 2001 006 171
- US-A1- 2002 023 918
- US-A1- 2012 153 688
- US-A1- 2018 372 420

## Description

### FIELD OF THE INVENTION

The present invention is an electrically isolating support element in combination with a resistive heating element.

### BACKGROUND

The present invention is directed to high temperature energy storage arrangements that utilize electrical heating elements for charging a carbon-based heat retaining core. In particular the invention relates to the support and electrical isolation of the heating elements from the electrically conductive heat retaining core.

Our earlier United States patent 10,345,050 discloses a particular structure of the core in combination with a series of electrical heating elements that are designed to operate at elevated temperatures with the core subject to frequent large temperature cycling.

Overall energy efficiency in combination with extended life of the heating elements as well as low maintenance are key considerations for most applications. These considerations are challenging given the expected frequent thermal cycling of the core, the high upper temperature limit of the system and the large temperature differential that is likely to occur for each temperature cycle. For many applications the frequent thermal cycling of the core will be at temperatures above 1000°C.

US2012153688A1 describes a flexible flat structure has a flexible, flat resistance heating element that is connected to electrodes that are spaced apart from one another for supplying electrical current that is pressed on to the resistance heating element by staples or clamps in a force-fit manner and/or a form-fit manner and provides a more flexible connection.

US2018372420A1 describes a thermal energy storage system utilizes a high temperature storage segment having flow passages extending through the storage segment whereby a working fluid can extract energy from the storage system for powering conventional downstream equipment.

### SUMMARY OF THE INVENTION

The present invention is directed to a high temperature electrically isolating support element in combination with a resistive heating element as detailed in claim 1. Advantageous features are provided in the dependent claims. In a preferred embodiment the invention is directed to the heating elements and the electrically isolating support thereof in the thermal core. Leakage current, heating element structure and ease of replacement directly impact the design of the system as described with respect to the preferred embodiment.

According to an aspect of the present invention a high temperature electrically isolating support element effectively cooperates with a resistive heating element to reduce leakage current from heating element through the electrical isolating support element to the electrically conductive heat retaining core. The isolating support element includes a narrow elongate slot passage sized to receive and straddle opposed edges of the resistive heating element. The support element includes a projecting landing within the slot for supporting a bottom surface of the resistive heating element at a raised position within the slot passage to limit the surface contact area of the resistive heating element and the support element.

In a preferred aspect of the invention the electrically isolating support element is of a two-piece construction. In a further aspect of the invention the two-piece construction is formed from the same one piece component with the components positioned in a reverse orientation.

According to an aspect of the invention, each support element includes at each side of the slot, a locating member that engages a side edge of the resistive heating element. This structure retains the support element in a given position along a length of the resistive heating element.

In a preferred aspect of the invention, each locating member projects inwardly and engages a shallow recess in the resistive heating element.

In a different aspect of the invention, the resistive heating element includes a plurality of connected traces and each trace is supported by the at least one projecting landing portion of the support element.

In a preferred aspect of the invention, the at least one projecting landing portion of the support element supports a portion of the width of each the heating element trace portion.

A preferred aspect of the invention, the support element has the projecting landing portions having an area of less than 10 percent of the interior surface area of the slot.

In an aspect of the invention, the high temperature electrically isolating support element is combined with a resistive heating element that includes at least 4 traces and the at least one projecting landing portion is two projecting landing portions with each landing portion supporting two adjacent traces.

According to a preferred aspect of the invention, each opposed member of the support element are of the same section and include a central locating structure to separate the center two traces of the resistive heating elements.

In an aspect of the invention, the support element provides limited edge support and captures the traces as they pass through the slot. The support element has limited direct contact with the resistive heating element to reduce leakage current.

In a further aspect of the invention, the resistive heating element is made of a CFC material and the support element is made of a boron nitride ceramic material.

In a preferred aspect of the invention, each support element includes a securing arrangement to one side of the support element and exterior to the slot.

Each outer trace, in a preferred aspect of the invention, includes a shallow tooth segment in a limited region of an outer edge thereof and the shallow saw tooth segment cooperates with the locating member of the support element to locate the heating element in the slot in a fixed position.

### BRIEF DESCRIPTION OF THE DRAWINGS

Preferred embodiments of the invention are shown in the drawings wherein:
Figure 1 is a schematic view of the thermal storage matrix (prior art) shown in our earlier US Patent 10,345,050 that receives the electrical resistive heating elements and the isolating support elements shown in the following figures;
Figure 2 is a perspective view of 12 electrical heating elements connected in series, positioned and secured in a heat retaining core;
Figure 3 is a perspective view similar to Figure 2 of resistive heating elements positioned for receipt in thermal core of larger capacity;
Figure 4 is a perspective view of an isolating support element located on a resistive heating element;
Figures 5 and 6 are perspective views of the upper and lower surface of the component used to form the two pieces of the support element;
Figures 7 and 8 are a top view and a perspective view of the preferred shape of the resistive heating element; and
Figure 9 is a partial enlargement of a heating element at a support position.

### DETAILED DESCRIPTION OF THE PREFERRED EMBODIMENT

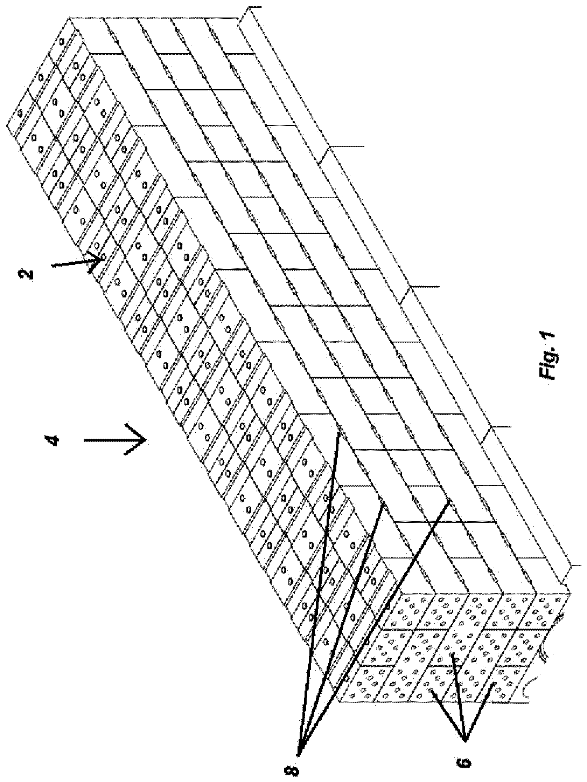

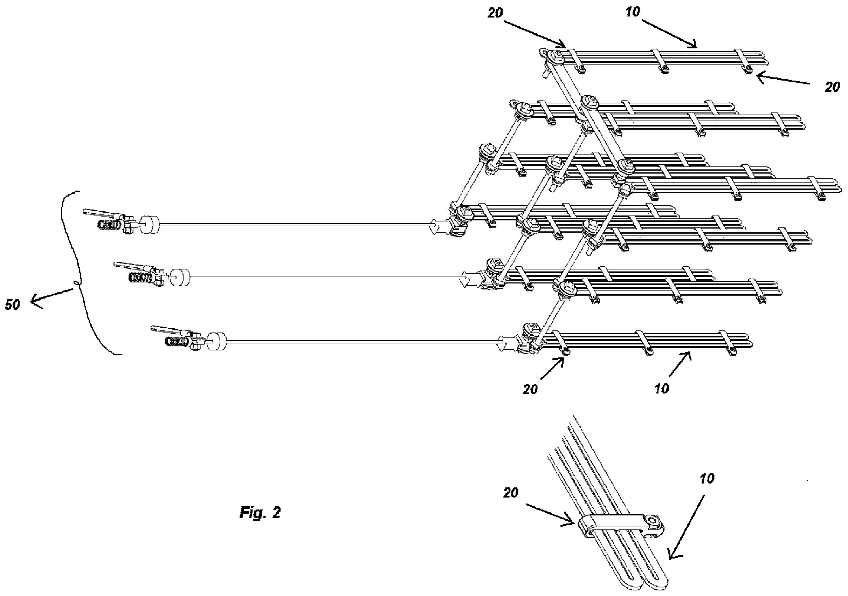

Figure 1 provides a general overview of a thermal energy matrix system 2 used to store thermal energy and is designed to operate at temperatures in excess of 1000°C although it can operate at lower temperatures. The matrix uses a graphite based thermal core 4 having a series of passages 6 distributed throughout the core that allow circulation of a controlled atmosphere through the core for energy output. The thermal core 4 includes a series of resistive heating element receiving ports 8 to locate the heating elements 10 (see figure 2) for effective heating of the core to temperatures well in excess of 1000°C. For example, in a first embodiment of the system, the upper limit is about 1450°C and in a second embodiment the upper limit is in excess of 2000°C preferably about 2450°C.

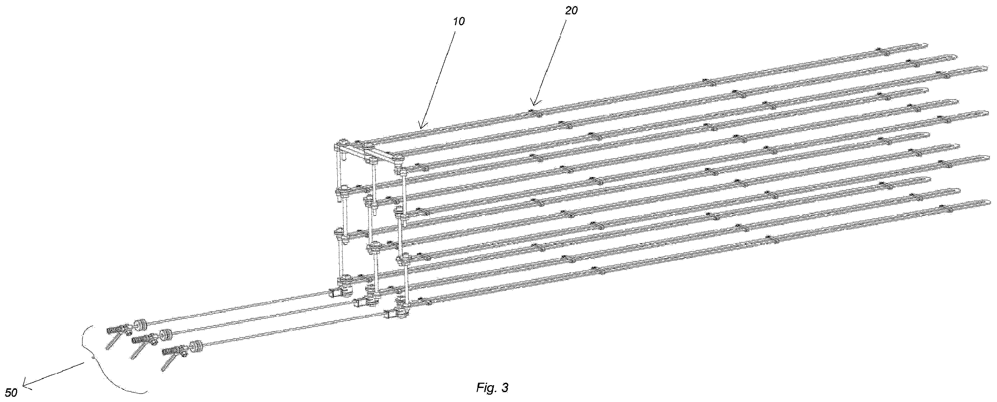

Figures 2 through 8 provide details of the effective support of the heating elements electrically isolated from the thermal core while the resistive heating elements are in close proximity to the thermal core for effective heat transfer. The electrical isolation of the heating elements includes consideration of effective heat transfer and space utilization of the overall system. Electrical isolation is only one of several key factors in the efficient operation of the overall system. The graphite or carbon-based core is suitable for the desired high temperature applications and beyond. The core has good thermal conductivity and high mechanical strength and stability throughout the elevated operating temperature range. The core is also electrically conductive and may be directly grounded such that the resistive heating elements 10 need to be electrically isolated from the core while maintaining effective heat transfer. If the core is not directly grounded leakage current through the core is still possible and reduced by the present system.

As shown in Figure 2, each resistive heating element 10 includes a plurality of electrically isolating support elements 20 separating the heating elements from the thermal core. Each support element 20 includes a first member 22 and a second member 24 that cooperate in an opposed orientation to define the narrow elongate slot 26 therebetween. These members engage in a limited manner, opposed edges 42 and 44 of the resistive heating element and form a band about the resistive heating element. The contact area between the heating elements and the support elements is reduced as much as practical to reduce leakage current and to provide a more uniform heating profile that increases the life expectancy of the heating elements. The support elements provide limited edge support and capture the heating element as it passes through the slot with the heating element having limited direct contact with the support element and spaced therefrom.

The resistive heating elements are connected to electrical inputs 50 that receive power typically from either a controlled 3 phase AC or DC electric power input.

The electrically isolating support elements can be made of an alumina ceramic material for applications under about 1250°C or can be made of boron nitride ceramic material for higher temperature applications up to about 2250°C. Each of these materials provide high electrical resistivity and are tolerant with respect to frequent high temperature thermal cycling. Some care is required with the boron nitride ceramic isolator as it can be more fragile. Each of these isolators cooperate with the heating elements to limit electrical current leakage and provide improved efficiency. The manner of supporting and engaging each resistive heating element limits the size of the contact area and the resistive heating elements provide a more uniform heating profile increasing the life expectancy of each heating element. The heating elements are essentially spaced from the slot as they pass centrally through the slot while maintaining a close position to the thermal core. Longer life is an important consideration as the heating elements form a major cost component of the system and replacement of the heaters involves considerable down time and labour expense.

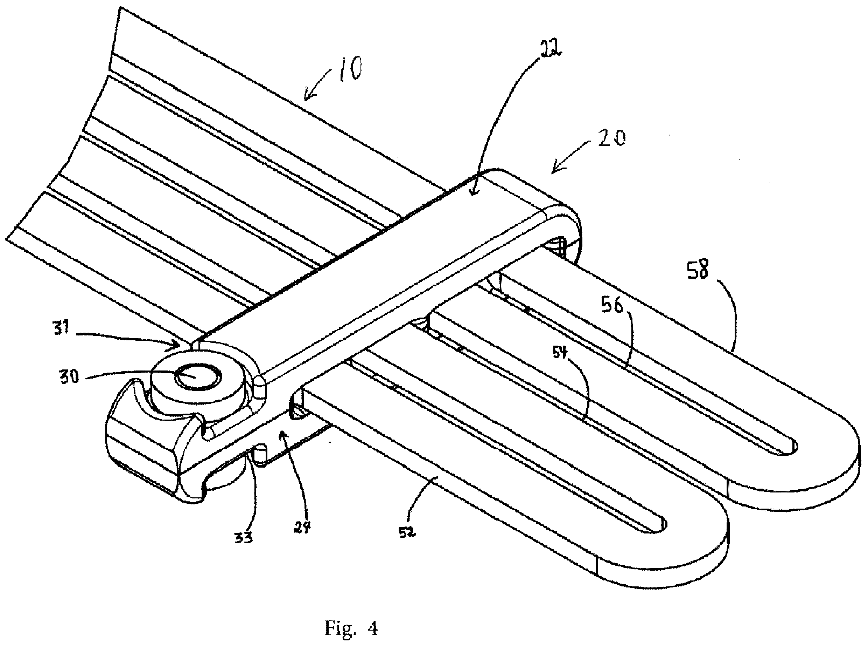

Figures 4, 5 and 6 provide details of the resistive heating element 10 and one of the support elements 20 located adjacent a free end of the heating element 10. Each support element 10 includes the first member 22 and the second member 24 secured exteriorly at one edge of the resistive heating element by securing member 30 received in outwardly opening recesses 31 and 33 of the respective first and second members. The securing member is generally flush with the upper and lower surfaces of the support element 20. This configuration simplifies the slot configuration in the thermal core and positions the securing member 30 to one side of isolating support element 20 and spaced from the heating element 10. This structure simplifies initial construction of the system and future replacement.

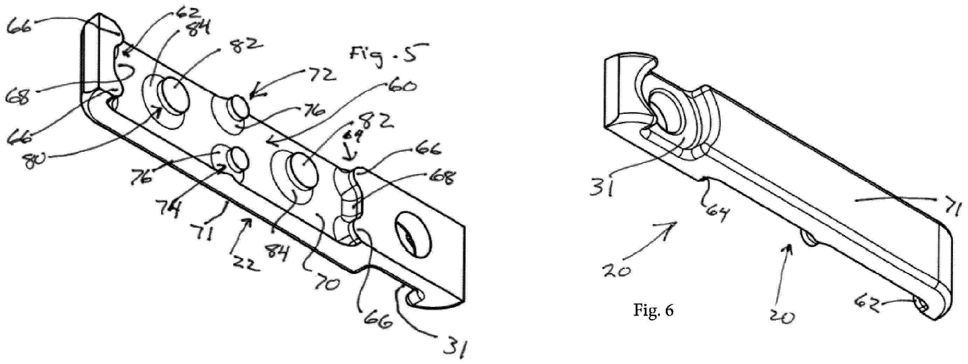

As shown in Figure 5 and 6, the first members are preferably the same component. For purpose of these figures it is described as first member 22 but the description equally applies to the second member 24. First member 22 is designed to provide limited edge support of the individual traces 52, 54, 56 and 58 at apposition spaced from planar surface 70. Each heating element 10 includes notched regions 12 that are engaged by and cooperate with the first member 22 to locate and support the traces of the heating element. The traces essentially are maintained in a position spaced from each other with limited direct surface contact with the support element.

First member 22 includes central recess 60 sized to cooperate with an opposed member to receive the 4 traces 52, 54, 56 and 58 captured therebetween and spaced therefrom. Opposed edges 62 and 64 of the recess 60 include projecting segments 66 and a central indentation 68 that increase in width downwardly to support the outer trace above the planar surface 70. The support position is such that each first member accommodates more than half of the thickness of the heating element and the trace elements are spaced from and not in direct contact with the planar surface 70. In contrast support surface 71 is in direct contact with the thermal core and will be at the temperature of the thermal core and below the temperature of the heating elements.

Recess 60 includes two small central supports 72 and 74 that increase in width in a direction towards planar surface 70. Each support 72 and 74 includes an enlarged base 76 that engages and locates the heating element at the gap 96 between traces 54 and 56. The gap 96 is slightly larger than the diameter of each support 72 and 74 above base 76. Therefore supports 72 and 74 locate and support traces 54 and 56 in the slot and base 76 positions the traces spaced above planar surface 70 and centrally in recess 60. Outer traces 52 and 54 on an outside edge thereof include a projection 90 having a corresponding recess 92 on the opposite edge of the trace. Projections 90 and recesses 92 occur at each position in the length of the heating elements 10 used to engage with support element 20.

Recess 92 in combination with the gap 98 between trace 52 and trace 54, defines sufficient space to partially receive and engage support 80. The top portion 82 of support 80, is closely received in this space with the base 84 supporting the traces spaced from planar surface 70. Support 82 to the other side of supports 72 and 74 supports traces 56 and 58 in a similar manner. With this arrangement limited edge support of the traces allows the traces to be generally out of direct contact with the support elements. This is desired even though the support elements have good electrical resistivity.

The outwardly extending projections 90 are located in the central indentations 68 of the support element. Projecting segments 66 locate the edges of the outer traces and an enlarged base supports the traces spaced from planar surface 70. With this arrangement the amount of direct surface contact between the support elements 20 and the traces of heating element 10 is quite small and the amount of leakage current is reduced.

Each outer trace at a support position, includes a projection 90 on an outer edge of the trace and a corresponding gap 92 on the opposite inside edge of the respective trace of heating element 10. With this arrangement the top and bottom surface area of the trace remain essentially the same throughout the length of the trace. Furthermore, the heating profile of each trace of heating element 10 is essentially the same while providing a preferred support function and locating function with the isolating support elements 20.

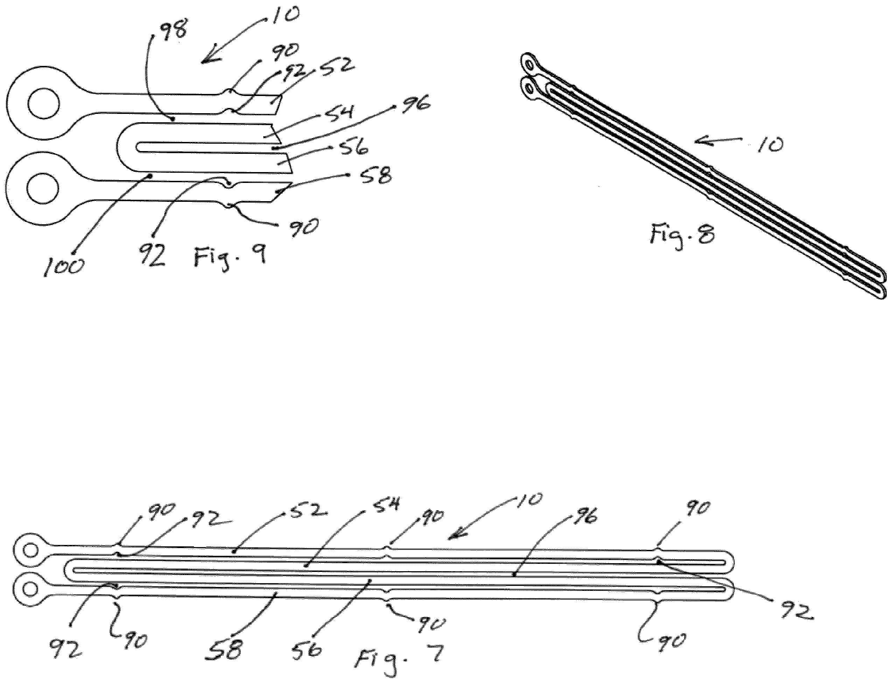

Figure 9 is a partially enlargement of a portion of the heating element 10 at a support element 20 position.

The particular materials for the support elements provide high mechanical strength and high electrical resistivity for this particular high temperature application. The manner of supporting the trace elements of the heating elements in the support members provides effective support and positive engagement of the traces while reducing direct surface contact area. This provides an effective balance between reduced leakage current, effective support of the trace elements and close proximity of the trace elements to the thermal core without having large variations in the heat profile of the individual traces. As the length of the heating elements is increased more support elements may be provided. The heating elements having 4 closely placed connected traces, is space efficient and effective in transferring heat energy and maintaining the capacity of the thermal core. The support elements 20 due to engagement with the traces, remain in position when the heating element 10 is inserted in the thermal core and maintain the heating elements out of direct contact with the thermal core.

The scope of the invention is defined by the appended claims that follow.

## Claims

1. A high temperature electrically isolating support element (20) in combination with a resistive heating element (10), said resistive heating element having a plurality of traces (52, 54, 56, 58) spaced from each other;
**characterized in that**:
said isolating support element (20) comprising two opposed members (22, 24) each having a planar surface (70) and configured to define a narrow, elongated slot (26) therebetween;
said slot (26) sized to receive and straddle opposed edges of said resistive heating element (10); with at least one of said opposed members (22, 24) including a projecting landing portion (72, 82) extending into the slot (26) from said planar surface;
said projecting landing portion (72, 82) having a base which is larger than a top portion of the projecting landing portion (72, 82); said top portion of the projecting landing portion (72, 82) sized to fit between said plurality of traces (52, 54, 56, 58) of said resistive heating element (10) to support said resistive heating element (10) along the edges thereof at a raised position with respect to the planar surface (70) within said slot (26) to limit the direct contact area of said resistive heating element (10) and support element.

2. The high temperature electrically isolating support element (20) in combination with a resistive heating element (10) as claimed in claim 1 wherein said opposed members (22, 24) are of the same section.

3. The high temperature electrically isolating support element (20) in combination with a resistive heating element (10) as claimed in claim 1 wherein at least one of said support element includes at each side of said slot, a locating member that engages a side edge of said resistive heating element (10) locating and retaining said support element in a known position in a length of said resistive heating element.

4. The high temperature electrically isolating support element (20) in combination with a resistive heating element (10) as claimed in claim 3 wherein each locating member projects inwardly and engages a shallow recess in said resistive heating element.

5. The high temperature electrically isolating support element (20) in combination with a resistive heating element (10) as claimed in claim 4 wherein said resistive heating element (10) includes a plurality of connected traces (52, 54, 56, 58) and each trace is supported by said at least one projecting landing portion (72, 82).

6. The high temperature electrically isolating support element (20) in combination with a resistive heating element (10) as claimed in claim 5 wherein said at least one projecting landing portion (72, 82) supports only a portion of each trace portion.

7. The high temperature electrically isolating support element (20) in combination with a resistive heating element (10) as claimed in claim 6 wherein said at least one projecting landing portion (72, 82) has an area less than 10 percent of the area of said slot.

8. The high temperature electrically isolating support element (20) in combination with a resistive heating element (10) as claimed in claim 7 wherein said plurality of traces of said resistive heating element (10) includes at least 4 traces (52, 54, 56, 58) and said at least one projecting landing portion (72, 82) is two projecting landing portion (72, 82)s with each landing portion supporting two adjacent traces (52, 54, 56, 58) .

9. The high temperature electrically isolating support element (20) in combination with a resistive heating element (10) as claimed in claim 8 wherein each opposed member of said support element are of the same section and include a central locating structure to separate the center two traces (52, 54, 56, 58) of said resistive heating elements.

10. The high temperature electrically isolating support element (20) in combination with a resistive heating element (10) as claimed in claim 9 wherein said resistive heating element (10) is made of a CFC material and said support element is made of a boron nitride ceramic material.

11. The high temperature electrically isolating support element (20) in combination with a resistive heating element (10) as claimed in claim 10 wherein said support element includes a securing arrangement to one side of said support element.

12. The high temperature electrically isolating support element (20) in combination with a resistive heating element (10) as claimed in claim 11 wherein each trace includes a shallow saw tooth segment in a limited region of each edge thereof and said shallow saw tooth segment cooperates with said locating member of said support element.

13. The high temperature electrically isolating support element (20) in combination with a resistive heating element (10) of claim 1 in combination with a high temperature thermal energy storage system comprising a thermal core of a carbon based or graphite material with a series of the electrical resistive heating elements located in slotted ports located in a distributed manner in the core; said series of electrical resistive heating elements having capacity to heat said thermal core to temperatures in excess of 1400°C; each electrical resistive heating element (10) being supported by a plurality of the isolating support elements spaced in a length of the electrical resistive heating element (10) to support the electrical resistive heating element (10) within one of said slots and out of direct contact with the thermal core and providing electrical isolation therefrom.

14. The high temperature thermal energy storage system as claimed in claim 13 wherein said opposed members (22, 24) of each isolating support element (20) are of the same section.

15. The high temperature thermal energy storage system as claimed in claim 13 wherein at least one of said support elements includes at each side of said slot (26) therein, a locating member that engages a side edge of the respective resistive heating element (10) locating and retaining said isolating support element (20) in a known position in a length of said resistive heating element.

16. The high temperature thermal energy storage system as claimed in claim 15 wherein each locating member projects inwardly and engages a shallow recess in said resistive heating element.

## Patentansprüche

1. Ein elektrisch isolierendes Hochtemperaturstützelement (20) in Kombination mit einem Widerstandsheizelement (10), wobei das Widerstandsheizelement eine Vielzahl von Bahnen (52, 54, 56, 58) aufweist, die voneinander beabstandet sind;
**dadurch gekennzeichnet, dass**:
das isolierende Stützelement (20) zwei gegenüberliegende Teile (22, 24) beinhaltet, die jeweils eine planare Oberfläche (70) aufweisen und konfiguriert sind, um einen schmalen, länglichen Schlitz (26) dazwischen zu definieren;
der Schlitz (26) bemessen ist, um gegenüberliegende Ränder des Widerstandsheizelements (10) aufzunehmen und zu überspannen; wobei mindestens eines der gegenüberliegenden Teile (22, 24) einen vorstehenden Anlageabschnitt (72, 82) umfasst, der sich von der planaren Oberfläche in den Schlitz (26) erstreckt;
der vorstehende Anlageabschnitt (72, 82) eine Basis aufweist, die größer als ein oberer Abschnitt des vorstehenden Anlageabschnitts (72, 82) ist; wobei der obere Abschnitt des vorstehenden Anlageabschnitts (72, 82) bemessen ist, um zwischen die Vielzahl von Bahnen (52, 54, 56, 58) des Widerstandsheizelements (10) zu passen, um das Widerstandsheizelement (10) entlang der Ränder davon in einer angehobenen Position in Bezug auf die planare Oberfläche (70) innerhalb des Schlitzes (26) zu stützen, um die direkte Kontaktfläche des Widerstandsheizelements (10) und des Stützelements zu begrenzen.

2. Elektrisch isolierendes Hochtemperaturstützelement (20) in Kombination mit einem Widerstandsheizelement (10) gemäß Anspruch 1, wobei die gegenüberliegenden Teile (22, 24) den gleichen Querschnitt aufweisen.

3. Elektrisch isolierendes Hochtemperaturstützelement (20) in Kombination mit einem Widerstandsheizelement (10) gemäß Anspruch 1, wobei mindestens eines des Stützelements auf jeder Seite des Schlitzes ein Lokalisierungsteil umfasst, das mit einem Seitenrand des Widerstandsheizelements (10) in Eingriff kommt, sodass das Stützelement an einer bekannten Position entlang einer Länge des Widerstandsheizelements lokalisiert und gehalten wird.

4. Elektrisch isolierendes Hochtemperaturstützelement (20) in Kombination mit einem Widerstandsheizelement (10) gemäß Anspruch 3, wobei jedes Lokalisierungsteil nach innen vorsteht und mit einer flachen Vertiefung in dem Widerstandsheizelement in Eingriff kommt.

5. Elektrisch isolierendes Hochtemperaturstützelement (20) in Kombination mit einem Widerstandsheizelement (10) gemäß Anspruch 4, wobei das Widerstandsheizelement (10) eine Vielzahl von verbundenen Bahnen (52, 54, 56, 58) umfasst und jede Bahn durch den mindestens einen vorstehenden Anlageabschnitt (72, 82) gestützt wird.

6. Elektrisch isolierendes Hochtemperaturstützelement (20) in Kombination mit einem Widerstandsheizelement (10) gemäß Anspruch 5, wobei der mindestens eine vorstehende Anlageabschnitt (72, 82) nur einen Teil jedes Bahnabschnitts stützt.

7. Elektrisch isolierendes Hochtemperaturstützelement (20) in Kombination mit einem Widerstandsheizelement (10) gemäß Anspruch 6, wobei der mindestens eine vorstehende Anlageabschnitt (72, 82) eine Fläche aufweist, die weniger als 10 Prozent der Fläche des Schlitzes beträgt.

8. Elektrisch isolierendes Hochtemperaturstützelement (20) in Kombination mit einem Widerstandsheizelement (10) gemäß Anspruch 7, wobei die Vielzahl von Bahnen des Widerstandsheizelements (10) mindestens 4 Bahnen (52, 54, 56, 58) umfasst und der mindestens eine vorstehende Anlageabschnitt (72, 82) zwei vorstehende Anlageabschnitte (72, 82) ist, wobei jeder Anlageabschnitt zwei benachbarte Bahnen (52, 54, 56, 58) stützt.

9. Elektrisch isolierendes Hochtemperaturstützelement (20) in Kombination mit einem Widerstandsheizelement (10) gemäß Anspruch 8, wobei jedes gegenüberliegende Teil des Stützelements den gleichen Querschnitt aufweist und eine mittige Lokalisierungsstruktur aufweist, um die zwei mittleren Bahnen (52, 54, 56, 58) der Widerstandsheizelemente zu trennen.

10. Elektrisch isolierendes Hochtemperaturstützelement (20) in Kombination mit einem Widerstandsheizelement (10) gemäß Anspruch 9, wobei das Widerstandsheizelement (10) aus einem CFC-Material besteht und das Stützelement aus einem Bornitridkeramikmaterial besteht.

11. Elektrisch isolierendes Hochtemperaturstützelement (20) in Kombination mit einem Widerstandsheizelement (10) gemäß Anspruch 10, wobei das Stützelement eine Sicherungsanordnung auf einer Seite des Stützelements umfasst.

12. Elektrisch isolierendes Hochtemperaturstützelement (20) in Kombination mit einem Widerstandsheizelement (10) gemäß Anspruch 11, wobei jede Bahn ein flaches Sägezahnsegment in einer begrenzten Region jedes Rands davon umfasst und das flache Sägezahnsegment mit dem Lokalisierungsteil des Stützelements zusammenwirkt.

13. Elektrisch isolierendes Hochtemperaturstützelement (20) in Kombination mit einem Widerstandsheizelement (10) gemäß Anspruch 1 in Kombination mit einem Hochtemperaturwärmeenergiespeichersystem, das einen Wärmekern aus einem kohlenstoffbasierten Material oder einem Graphitmaterial beinhaltet, wobei sich eine Reihe der elektrischen Widerstandsheizelemente in geschlitzten Öffnungen befindet, die sich auf eine verteilte Weise in dem Kern befinden; wobei die Reihe elektrischer Widerstandsheizelemente eine Kapazität zum Heizen des Wärmekerns auf Temperaturen von mehr als 1400 °C aufweist; wobei jedes elektrische Widerstandsheizelement (10) durch eine Vielzahl der isolierenden Stützelemente gestützt wird, die entlang einer Länge des elektrischen Widerstandsheizelements (10) beabstandet sind, um das elektrische Widerstandsheizelement (10) innerhalb eines der Schlitze und ohne direkten Kontakt mit dem Wärmekern zu stützen und eine elektrische Isolierung gegenüber diesem bereitzustellen.

14. Hochtemperaturwärmeenergiespeichersystem gemäß Anspruch 13, wobei die gegenüberliegenden Teile (22, 24) jedes isolierenden Stützelements (20) den gleichen Querschnitt aufweisen.

15. Hochtemperaturwärmeenergiespeichersystem gemäß Anspruch 13, wobei mindestens eines der Stützelemente auf jeder Seite des Schlitzes (26) darin ein Lokalisierungsteil umfasst, das mit einem Seitenrand des jeweiligen Widerstandsheizelements (10) in Eingriff kommt, sodass das isolierende Stützelement (20) an einer bekannten Position entlang einer Länge des Widerstandsheizelements lokalisiert und gehalten wird.

16. Hochtemperaturwärmeenergiespeichersystem gemäß Anspruch 15, wobei jedes Lokalisierungsteil nach innen vorsteht und mit einer flachen Vertiefung in dem Widerstandsheizelement in Eingriff kommt.

## Revendications

1. Un élément de support électriquement isolant à haute température (20) en combinaison avec un élément chauffant résistif (10), ledit élément chauffant résistif ayant une pluralité de trajets (52, 54, 56, 58) espacés les uns des autres ;
**caractérisé en ce que** :
ledit élément de support isolant (20) comprend deux organes opposés (22, 24) ayant chacun une surface plane (70) et configurés pour délimiter une fente étroite allongée (26) entre eux ;
ladite fente (26) est dimensionnée pour recevoir et enjamber des bords opposés dudit élément chauffant résistif (10) ; au moins un desdits organes opposés (22, 24) incluant une portion d'appui saillante (72, 82) s'étendant dans la fente (26) depuis ladite surface plane ;
ladite portion d'appui saillante (72, 82) a une base qui est plus grande qu'une portion supérieure de la portion d'appui saillante (72, 82) ; ladite portion supérieure de la portion d'appui saillante (72, 82) étant dimensionnée pour se loger entre ladite pluralité de trajets (52, 54, 56, 58) dudit élément chauffant résistif (10) afin de supporter ledit élément chauffant résistif (10) le long des bords de celui-ci à une position surélevée par rapport à la surface plane (70) à l'intérieur de ladite fente (26) pour limiter l'aire de contact direct dudit élément chauffant résistif (10) et dudit élément de support.

2. L'élément de support électriquement isolant à haute température (20) en combinaison avec un élément chauffant résistif (10) tel que revendiqué dans la revendication 1 dans lequel lesdits organes opposés (22, 24) ont la même section.

3. L'élément de support électriquement isolant à haute température (20) en combinaison avec un élément chauffant résistif (10) tel que revendiqué dans la revendication 1 dans lequel au moins un dudit élément de support inclut, de chaque côté de ladite fente, un organe de positionnement qui vient en contact avec un bord latéral dudit élément chauffant résistif (10) en positionnant et en retenant ledit élément de support dans une position connue sur une longueur dudit élément chauffant résistif.

4. L'élément de support électriquement isolant à haute température (20) en combinaison avec un élément chauffant résistif (10) tel que revendiqué dans la revendication 3 dans lequel chaque organe de positionnement fait saillie vers l'intérieur et vient en contact avec un creux peu profond dans ledit élément chauffant résistif.

5. L'élément de support électriquement isolant à haute température (20) en combinaison avec un élément chauffant résistif (10) tel que revendiqué dans la revendication 4 dans lequel ledit élément chauffant résistif (10) inclut une pluralité de trajets (52, 54, 56, 58) reliés et chaque trajet est supporté par ladite au moins une portion d'appui saillante (72, 82).

6. L'élément de support électriquement isolant à haute température (20) en combinaison avec un élément chauffant résistif (10) tel que revendiqué dans la revendication 5 dans lequel ladite au moins une portion d'appui saillante (72, 82) supporte seulement une portion de chaque portion trajet.

7. L'élément de support électriquement isolant à haute température (20) en combinaison avec un élément chauffant résistif (10) tel que revendiqué dans la revendication 6 dans lequel ladite au moins une portion d'appui saillante (72, 82) a une aire inférieure à 10 pour cent de l'aire de ladite fente.

8. L'élément de support électriquement isolant à haute température (20) en combinaison avec un élément chauffant résistif (10) tel que revendiqué dans la revendication 7 dans lequel ladite pluralité de trajets dudit élément chauffant résistif (10) inclut au moins 4 trajets (52, 54, 56, 58) et ladite au moins une portion d'appui saillante (72, 82) est deux portions d'appui saillantes (72, 82), chaque portion d'appui supportant deux trajets (52, 54, 56, 58) adjacents.

9. L'élément de support électriquement isolant à haute température (20) en combinaison avec un élément chauffant résistif (10) tel que revendiqué dans la revendication 8 dans lequel chaque organe opposé dudit élément de support a la même section et inclut une structure de positionnement centrale pour séparer les deux trajets centraux (52, 54, 56, 58) desdits éléments chauffants résistifs.

10. L'élément de support électriquement isolant à haute température (20) en combinaison avec un élément chauffant résistif (10) tel que revendiqué dans la revendication 9 dans lequel ledit élément chauffant résistif (10) est constitué d'un matériau CFC et ledit élément de support est constitué d'un matériau céramique au nitrure de bore.

11. L'élément de support électriquement isolant à haute température (20) en combinaison avec un élément chauffant résistif (10) tel que revendiqué dans la revendication 10 dans lequel ledit élément de support inclut un agencement de fixation d'un côté dudit élément de support.

12. L'élément de support électriquement isolant à haute température (20) en combinaison avec un élément chauffant résistif (10) tel que revendiqué dans la revendication 11 dans lequel chaque trajet inclut un segment en dents de scie peu profondes dans une région limitée de chaque bord de celui-ci et ledit segment en dents de scie peu profondes coopère avec ledit organe de positionnement dudit élément de support.

13. L'élément de support électriquement isolant à haute température (20) en combinaison avec un élément chauffant résistif (10) de la revendication 1 en combinaison avec un système de stockage d'énergie thermique à haute température comprenant un cœur thermique d'un matériau à base de carbone ou de graphite avec une série des éléments chauffants résistifs électriques positionnés dans des orifices en forme de fente positionnés d'une manière répartie dans le cœur ; ladite série d'éléments chauffants résistifs électriques ayant la capacité de chauffer ledit cœur thermique jusqu'à des températures dépassant 1400 °C ; chaque élément chauffant résistif électrique (10) étant supporté par une pluralité des éléments de support isolants espacés sur une longueur de l'élément chauffant résistif électrique (10) pour supporter l'élément chauffant résistif électrique (10) à l'intérieur de l'une desdites fentes et hors de contact direct avec le cœur thermique et assurant son isolation électrique par rapport à celui-ci.

14. Le système de stockage d'énergie thermique à haute température tel que revendiqué dans la revendication 13 dans lequel lesdits organes opposés (22, 24) de chaque élément de support isolant (20) ont la même section.

15. Le système de stockage d'énergie thermique à haute température tel que revendiqué dans la revendication 13 dans lequel au moins un desdits éléments de support inclut, de chaque côté de ladite fente (26) dans celui-ci, un organe de positionnement qui vient en contact avec un bord latéral de l'élément chauffant résistif (10) respectif en positionnant et en retenant ledit élément de support isolant (20) dans une position connue sur une longueur dudit élément chauffant résistif.

16. Le système de stockage d'énergie thermique à haute température tel que revendiqué dans la revendication 15 dans lequel chaque organe de positionnement fait saillie vers l'intérieur et vient en contact avec un creux peu profond dans ledit élément chauffant résistif.
